# EUROPÄISCHE PATENTSCHRIFT

(11) **EP 0 535 344 B1**
(45) Veröffentlichungstag und Bekanntmachung des Hinweises auf die Patenterteilung: **29.11.1995**
(21) Anmeldenummer: 92113950.7
(22) Anmeldetag: 17.08.1992
(51) Int. Cl.: B66B 5/00, B66B 5/18, F16D 59/02

(54) **Einrichtung für die Erfassung und Signalisierung der Funktion und des Zustandes einer Sicherheitsbremse für Aufzüge**
Apparatus for detecting and signaling the function and the status of an elevator safety brake
Dispositif de détection et de signalisation de la fonction et l'état d'un frein de sécurité pour ascenseurs

(30) Priorität: 02.10.1991 US 771044
(43) Veröffentlichungstag der Anmeldung: 07.04.1993
(73) Patentinhaber: INVENTIO AG, CH-6052 Hergiswil NW (CH)
(72) Erfinder: Lam, Miles P., Chester, NJ 07930 (US); Bachmann, Herbert, CH-6006 Luzern (CH)

(56) Entgegenhaltungen:
- DE-A- 2 117 278
- GB-A- 2 226 292
- US-A- 4 232 768

## Beschreibung

Die vorliegende Erfindung betrifft eine Einrichtung für die Erfassung und Signalisierung der Funktion und des Zustandes einer elektromagnetisch betätigten, zwei Bremsdruckfedern aufweisenden Zweikreis-Sicherheitsscheibenbremse für Aufzüge.

Nach den einschlägigen Vorschriften für mechanische Bremsen an Aufzugstriebwerken müssen diese als sogenannte Sicherheitsbremsen ausgeführt werden, indem alle mechanischen Teile der Bremse, die an der Bremswirkung auf die Bremsscheibe beteiligt sind doppelt vorhanden und so ausgelegt sind, dass bei Versagen eines dieser Bauteile an der Bremsscheibe eine zur Verzögerung des mit Nennlast beladenen Fahrkorbes ausreichende Bremswirkung erhalten bleibt.

Für die Ueberwachung der Funtionen einer Sicherheitsscheibenbremse ist es üblich, durch die Bewegungen der Bremshebel und/oder Magnetstössel an entsprechenden Stellen angebrachte Mikroschalter zu betätigen, welche dann ihrerseits mit den jeweiligen Kontaktstellungen Teil einer Ueberwachungs- und Sicherheitsschaltung bilden und beeinflussen. Infolge der allgemein kurzen Betätigungswege werden diese Mikroschalter ausschliesslich vom Magnetstössel oder vom Ende des längeren Teils eines Bremshebels betätigt. Mit einer solchen Anordnung können aber nur die einfachen Bewegungen der beiden Bremshebel erfasst werden. Falls sich infolge Federbruch ein Bremshebel mit verminderter Kraft immer noch bewegt, wird dieser Fehler nicht erkannt und eine mehr oder weniger reduzierte Bremswirkung ist die Folge.

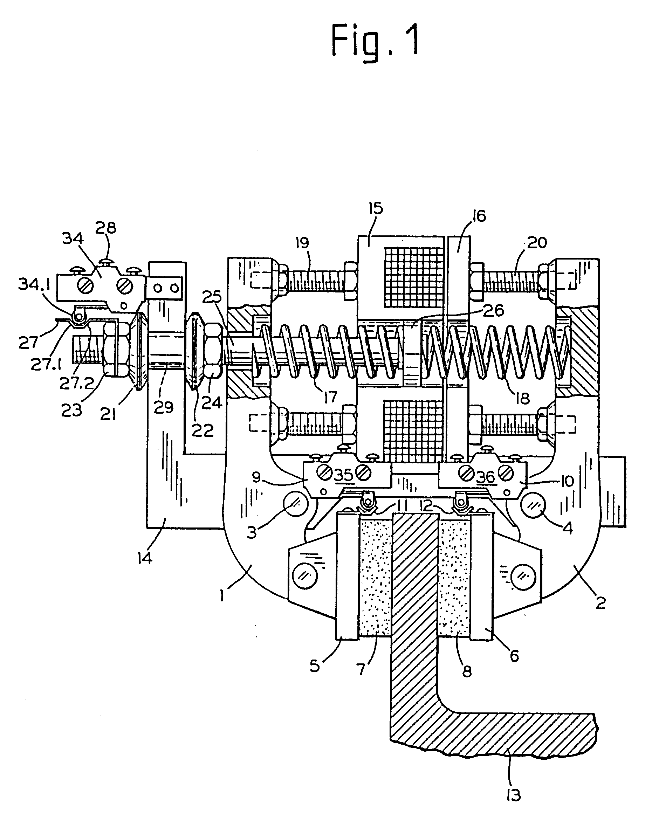

Die Figur 1 der deutschen Offenlegungsschrift Nr. 26 17 882 zeigt eine typische Konstruktion einer Sicherheitsbremse für Aufzüge. Es ist offensichtlich, dass entsprechende Mikroschalter am Magnetgehäuse angebracht und vom oberen Ende eines Bremshebels betätigt würden. Der untere Teil des Magnetgehäuses bildet wie üblich ein starres Federanschlagzentrum, wodurch der Bruch einer Bremsdruckfeder mit grosser Wahrscheinlichkeit nicht sofort bemerkt würde. Ebenso wird eine fällige Nachstelloperation nicht gemeldet. Der vorliegenden Erfindung liegt die Aufgabe zugrunde, eine Einrichtung zu schaffen mit welcher die Funktion und der Zustand einer elektromagnetisch betätigten Sicherheitsscheibenbremse mit einfachen Mitteln und Konstruktionen erfasst und signalisiert werden kann.

Die durch die Erfindung erreichten Vorteile sind im wesentlichen darin zu sehen, dass neben den üblichen Positionsdetektionen eine Information über ein eventuelles Kräfteungleichgewicht bei den Bremsdruckfedern vorliegt und dass das Erreichen einer maximal zulässigen Bremsbelagsabnützung gemeldet wird.

Ein weiterer Vorteil liegt darin, dass die Erfassung des Kräfteungleichgewichtes der Bremsdruckfedern mit den gleichen Mitteln wie für die übliche Positionsmeldung realisiert wird. In den Zeichnungen ist ein Ausführungsbeispiel dargestellt, und es zeigen
- Fig. 1: eine Sicherheitsbackenbremse mit der erfindungsgemässen Einrichtung im Querschnitt,
- Fig. 2: die Reaktion der Einrichtung bei einem Bremsdruckfederbruch,
- Fig. 3: eine Alternativlösung für einen Wegfühler
- Fig. 4: eine Einzelheit betreffend die Schalterbetätigung und
- Fig. 5: eine weitere Alternativlösung für einen Wegfühler.

In der Fig. 1 wird eine ganze Sicherheitsscheibenbremse mit allen Einzelheiten und mit der angebauten erfindungsgemässen Einrichtung gezeigt. Ein an einer nicht dargestellten Antriebsmaschine befestigter Trägerwinkel 14 trägt an zwei Achsbolzen 3 und 4 je einen Bremshebel 1 und 2, welche an ihren Enden am unteren kürzeren Teil je einen Bremsschuh 5 und 6 mit Bremsbelägen 7 und 8 aufweisen. Die oberen längeren Teile der Bremshebel 1 und 2 sind mittels zwei eingespannten Bremsdruckfedern 17 und 18 auseinandergespreizt, wodurch die Bremsbacken 5 und 6 mit ihren Bremsbelägen 7 und 8 beidseitig auf eine Bremsscheibe 13 gepresst werden und ein Bremsmoment bewirken. Die Bremsdruckfedern 17 und 18 sind aussen in runden Vertiefungen in den Bremshebeln 1 und 2 geführt und innen von einer doppelseitigen Federanschlagschulter 26 gehalten, welche sich am rechten Ende eines Federzentrierbolzens 25 befindet. Der Federzentrierbolzen 25 ist beweglich durch eine Bohrung 29 im vertikalen Schenkel des Trägerwinkels 14 geführt und dort beidseitig der Bohrung 29 mittels Mutter 24, Doppelmutter 23, Feder 21 und Feder 22 in einer bestimmten horizontalen Lage fixiert. Zum Lösen der Bremse dient ein mit Schraubenbolzen 19 am linken Bremshebel 1 befestigter Bremsmagnet 15 und eine vom Bremsmagnet 15 angezogene, mittels Schraubenbolzen 20 am rechten Bremshebel 2 befestigte Ankerplatte 16. Ein am oberen Ende des vertikalen Schenkels des Trägerwinkels 14 befestigter Wegfühler 28 inform eines Mikroschalters 34 wird via Rollenhebel 34.1 von einer in der Doppelmutter 23 eingespannten Kulisse 27 mit Schaltflanken 27.1 und 27.2 bei einer Horizontalbewegung des Federzentrierbolzens 25 betätigt. Mit 9 und 10 sind zwei weitere Wegfühler inform von Mikroschalter 35 und 36 bezeichnet, welche von an den Bremsbacken 5 und 6 befestigten Kulissen 11 und 12 beeinflusst werden.

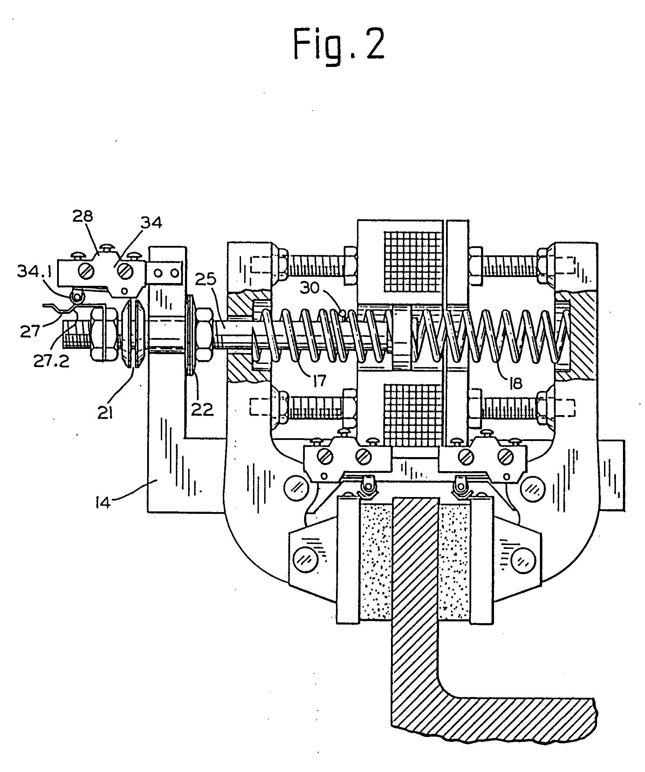

In der Fig. 2 ist ein Bruch der Bremsdruckfeder mit 30 bezeichnet.

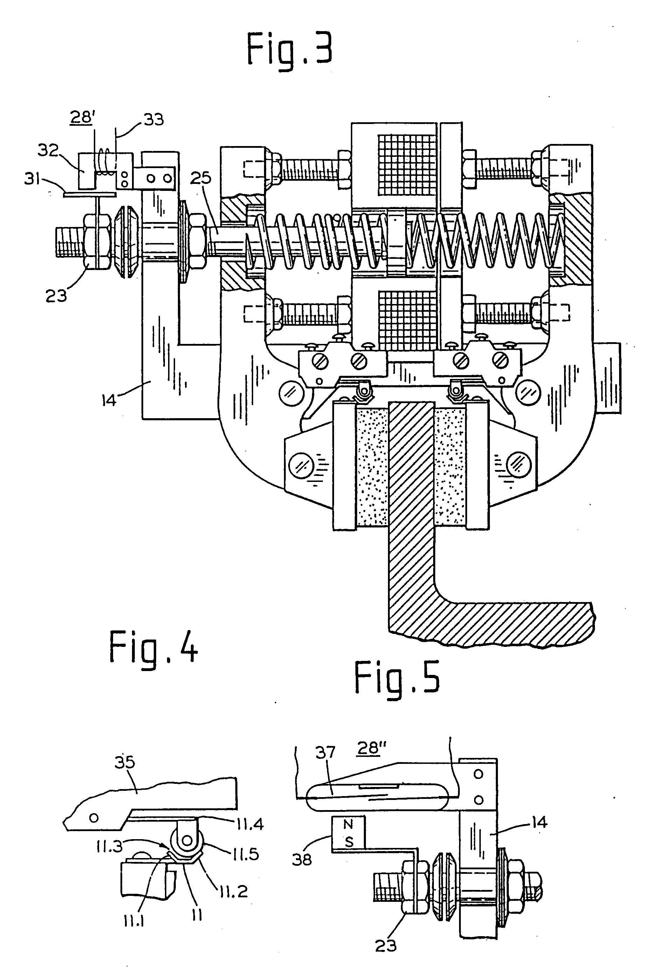

In der Fig. 3 wird der Wegfühler 28 aus einem Eisenjoch 32, einer darauf befindlichen Spule 33 und einem in der Doppelmutter 23 eingespannten Ankerblech 31 gebildet.

In der Fig. 4 sind die Einzelheiten des Wegfühlers 9 dargestellt, wobei insbesondere die Ausbildung der Kulisse 11 zu beachten ist. Die Kulisse 11 weist Schaltflanken 11.1 und 11.2 auf, welche in einem Winkel von beispielsweise 60° zueinander stehen. Eine Rolle 11.5 eines Rollenhebels 11.4 des Mikroschalters 35 liegt bei geschlossener, und frisch nachgestellter Bremse so innerhalb der Schaltflanken 11.1 und 11.2, dass zwischen der Schaltflanke 11.1 und Rolle 11.5 ein Zwischenraum 11.3 vorhanden ist.

Die vorstehend beschriebene Einrichtung arbeitet wie folgt:
Die betriebsbereite Sicherheitsbremse bezw. der Federzentrierbolzen 25 ist so eingestellt, dass bei intakten Bremsdruckfedern 17, 18 bei allen Operationen der Sicherheitsbremse keine Betätigung des Wegfühlers 28 erfolgt.

Das ist deshalb der Fall, weil sich bei vorerst nicht zugestellten Muttern 23, 24 die doppelseitige Federanschlagschulter 26 und damit auch der Federzentrierbolzen 25 selbst in eine kräfteneutrale Position einstellen und dort bei gleichbleibendem Kräftegleichgewicht bei allen Bewegungen der Bremse ruhig verharren. Um nun zu vermeiden, dass bei kleinen Ungleichgewichten infolge Reibung eine unnötige Betätigung des Wegfühlers erfolgt, werden die Muttern 23, 24 soweit gleichmässig angezogen, dass die zwischen den Muttern 23, 24 und beidseitig der Bohrung 29 angeordneten Federn 21 und 22 leicht vorgespannt werden. Ein weiterer Grund für die Fixierung der Neutralstellung besteht darin, dass die Bremse bei Oeffnen immer genau die gleiche Position einnehmen muss, um ein Streifen der Bremsbeläge 7, 8 auf der Bremsscheibe 13 zu vermeiden. Die Einrichtung verharrt bei normalem Zustand der Bremse in der Lage, wie sie in der Fig. 1 dargestellt ist; also Wegfühler 28 nicht betätigt. Erfolgt nun infolge Ermüdung oder Ueberbeanspruchung ein Bruch 30 (Fig. 2) einer Bremsdruckfeder 17, entsteht aufgrund der Kraftänderung bei der defekten Bremsdruckfeder 17 ein entsprechendes Kräfteungleichgewicht, wodurch im vorliegenden Fall der Federzentrierbolzen 25 gegen die Kraft der Feder 22 nach links verschoben wird und die hiermit ebenfalls verschobene Schaltflanke 27.2 der Kulisse 27 den Rollenhebel 34.1 nach oben drückt und somit den Mikroschalter 34 betätigt. Bei betätigtem Mikroschalter 34 ist die Feder 22 ganz zusammengedrückt und begrenzt somit den Verschiebeweg des Federzentrierbolzens 25. Die Federn 22 und 23 werden vorteilhaft als Tellerfedern ausgeführt, weil deren Kräfteverlauf bei entsprechender Vorspannung die für diese Anwendung erwünschte nichtlineare Charakteristik aufweist. Ohne diese Einrichtung könnte ein solcher Defekt nicht bemerkt werden, weil mit einem starren Federanschlagzentrum gemäss Fundstelle die Bremse weiterhin "normal" funktioniert, aber mit entsprechend reduziertem Bremsmoment. Da solche Sicherheitsbremsen üblicherweise mit geregelten Antrieben kombiniert werden, müssen sie im Normalfall nur als Haltebremsen wirken. Deshalb kann ein solcher Defekt erst bei einer situationsbedingten Notbremsung entdeckt werden, weil dann der Bremsweg länger wird, mit allenfalls entsprechenden mehr oder weniger gefährlichen Folgen. Die Information eines infolge Defekt betätigten Wegfühlers 28 kann in eine Sicherheitsschaltung oder/und an eine zentrale Fernüberwachung weitergeleitet werden.

Als Alternativlösung zu einem Mikroschalter-Wegaufnehmer wird gemäss Fig. 4 die Anwendung eines Induktiv-Wegfühlers vorgeschlagen. Hierbei wird bei einem Bremsfederdefekt ein mit der Doppelmutter 23 eingespanntes Ankerblech 31 von einem Pol eines Eisenjoches 32 weggeschoben und so die Induktivität einer Spule 33 verändert. Die Induktivitätsänderung wird beispielsweise via Brücken- Verstärker- und Triggerschaltungen digital ausgewertet und analog wie vorgehend erwähnt weitergeleitet.

Gemäss Fig. 5 kann als Wegfühler 28 auch ein mit einem Permanentmagnet 34 betätigter Reed-Kontakt 35 eingesetzt werden.

Eine weitere Information betreffend den Zustand einer Sicherheitsbremse betrifft den Verschleissgrad der Bremsbeläge. Bei der erfindungsgemässen Einrichtung werden die Wegfühler 9 und 10 nebst der Signalisierung der Bremsstellung zusätzlich dazu benützt, dass Erreichen der zulässigen Verschleissgrenze der Bremsbeläge 7 und 8 einzig durch entsprechende Ausbildung der Kulissen 11 und 12 zu signalisieren.

In der Fig. 4 ist das entsprechende Teilstück der Kulisse 11 dargestellt und zeigt die spezielle Ausbildung der Schaltflanken 11.1 und 11.2, welche der erfindungsgemässen Doppelfunktion dienen. In der gezeigten Stellung liegt die Rolle 11.5 des Rollenhebels 11.4 gerade so an der Schaltflanke 11.2 an, dass bei einer, durch das Oeffnen der Bremse erfolgenden Bewegung der Kulisse 11 nach links die Rolle 11.5 und der Rollenhebel 11.4 sofort nach oben gedrückt werden und den Mikroschalter 35 betätigen, dessen interner Sprungkontakt das ordnungsgemässe Oeffnen dieser Bremshälfte bestätigt.

Analoges erfolgt auch bei der anderen Hälfte der Bremse mit dem Wegfühler 10. Mit zunehmendem Verschleiss des Bremsbelages 7 wandert die Kulisse 11 sukzessive nach rechts bei immer gleichbleibender ordnungsgemässen Betätigung des Mikroschalters 34 für die Stellungsmeldung bei den Bremsbewegungen. Im Laufe der Bremsbelagsabnützung wird der Zwischenraum 11.3 aufgebraucht und die Rolle 11.5 beginnt beim Einfallen der Bremse die Schaltflanke 11.1 zu berühren. Bei weiter fortschreitender Abnützung des Bremsbelages 7 beginnt die Rolle 11.5 beim Einfallen der Bremse an der Schaltflanke 11.1 hochzulaufen und es wird einmal der Moment erreicht, wo es zum zweimaligen Schalten des Mikroschalters 34 beim Einfallen der Bremse kommt. Der erstmalig auftretende Schaltzyklus Aus-Ein-Aus oder Ein-Aus-Ein des Kontaktes eines Wegfühlers 9, 10 beim Einfallen der Bremse signalisiert nun das Erreichen der zulässigen Verschleissgrenze eines Bremsbelages 7, 8. Der Winkel der Schaltflanken 11.1 und 11.2 zueinander ist beispielsweise mit 60° vorzusehen, weil so eine Vergrösserung des vertikalen Schaltweges gegenüber dem horizontalen Weg eines operierenden Bremsschuhs 5, 6 um ca das 1,8-fache erzielt wird.

Das Signal der zulässigen Bremsbelagabnützung kann ebenso wie jenes des Federdefektes an eine Ueberwachungsschaltung und/oder an eine zentrale Fernüberwachung weitergeleitet werden.

Das Prinzip der erfindungsgemässen Einrichtung lässt sich nicht nur für die Bauart Scheibenbremse anwenden, sondern ebenso auch für Trommelbremsen. Auch die Antriebsart ist belanglos für die Anwendung des Prinzips, denn eine mit der beschriebenen Einrichtung ausgerüstete Sicherheitsbrems kann auch ein hydraulisches, ein elektromotorisches oder ein anderes beliebiges Antriebssystem aufweisen. Wichtig ist bei allen Bremsenvarianten, dass ein verschiebbares Federanschlagzentrum vorhanden ist, welches bei einem Kräfteungleichgewicht Schaltreaktionen im Sinne der Erfindung auslösen kann.

## Patentansprüche

1. Einrichtung für die Erfassung und Signalisierung der Funktion und des Zustandes einer elektromagnetisch betätigten, zwei Bremsdruckfedern (17, 18) aufweisenden Zweikreis-Sicherheitsscheibenbremse für Aufzüge, wobei die Einrichtung dadurch gekennzeichnet ist,
dass ein bei einer Veränderung der Vorspannkraft in nur einer der beiden Bremsdruckfedern 17, 18 einen oberen Wegfühler 28 betätigender, in achsialer Richtung gegen eine Feder 21, 22 verschiebbarer Federzentrierbolzen 25 und mindestens ein, die Abnützungsgrenze eines Bremsbelages 7, 8 signalisierender, von einem Bremsschuh 5, 6 betätigter unterer Wegfühler 9, 10 vorhanden ist.

2. Einrichtung nach Anspruch 1
dadurch gekennzeichnet,
dass als oberer Wegfühler 28 ein von einer horizontal verschiebbaren, in einer Doppelmutter 23 eingespannten Kulisse 27 mit Schaltflanken 27.1 und 27.2 betätigter und an einem Support 14 befestigter Mikroschalter 34 vorhanden ist.

3. Einrichtung nach Anspruch 1
dadurch gekennzeichnet,
dass als unterer Wegfühler 9, 10 mindestens ein von einer an einem Bremsschuh 5, 6 befestigten Kulisse 11 mit Schaltflanken 11.1 und 11.2 betätigter Mikroschalter 35, 36 vorhanden ist.

4. Einrichtung nach den Ansprüchen 1 und 3
dadurch gekennzeichnet,
dass zwischen der Schaltflanke 11.1 und der Rolle eines Rollenhebels 11.4 des als unterer Wegfühler 9, 10 tätigen Mikroschalters 35, 36 bei nachgestellter Bremse ein Zwischenraum 11.3 vorgesehen ist.

5. Einrichtung nach den Ansprüchen 1 und 4
dadurch gekennzeichnet,
dass die Schaltflanke 11.1 eine durch Auflaufen der Rolle des Rollenhebels 11.4 des Mikroschalters 35, 36 beim Schliessen der Bremse die maximal zulässige Abnützung eines Bremsbelages 7, 8 signalisierende Funktion aufweist.

6. Einrichtung nach den Ansprüchen 1 und 5
dadurch gekennzeichnet,
dass die Schaltflanken 11,1 und 11.2 in einem Winkel von max. 60° zueinander angeordnet sind.

7. Einrichtung nach Anspruch 1
dadurch gekennzeichnet,
dass die auf dem durch Kräfteungleichgewicht infolge Bruches 30 einer Bremsdruckfeder 17, 18 horizontal verschiebbaren Federzentrierbolzen 25 mit Doppelmutter 23 und Mutter 24 vorspannbaren Federn 21, 22 als Tellerfedern ausgebildet sind.

8. Einrichtung nach Anspruch 1
dadurch gekennzeichnet,
dass der obere Wegfühler 28 als ein vom horizontal verschiebbaren Federzentrierbolzen 25 betätigter induktiver Wegfühler bestehend aus Ankerblech 31, Eisenjoch 32 und Spule 33 ausgebildet ist.

9. Einrichtung nach Anspruch 1
dadurch gekennzeichnet,
dass als oberer Wegfühler 28 ein von mindestens einem Permanentmagnet 34 betätigter Reed-Kontakt 35 vorhanden ist.

## Claims

1. Equipment for the detection and signalling of the function and the state of an electromagnetically actuated two-circuit safety disc brake, which displays two brake compression springs (17, 18), for lifts, wherein the equipment is characterised thereby, that a spring centring pin (25), which is displaceable in axial direction against a spring (21, 22) and actuates an upper travel sensor (28) on a change in the biassing in only one of both the brake compression springs (17, 18), and at least one lower travel sensor (9, 10), which is actuated by a brake shoe (5, 6) and signals the wear limit of a brake lining (7, 8), are present.

2. Equipment according to claim 1, characterised thereby, that a microswitch (34), which is fastened at a support (14) and actuated by switching flanks (27.1, 27.2) of an horizontally displaceable slide gate (27) clamped in a double nut (23), is present as upper travel sensor (28).

3. Equipment according to claim 1, characterised thereby, that at least one microswitch (35, 36), which is actuated by switching flanks (11.1, 11.2) of a slide gate (11) fastened at a brake shoe (5, 6), is present as lower travel sensor (9, 10).

4. Equipment according to the claims 1 and 3, characterised thereby, that a gap (11.3) is provided between the switching flank (11.1) and the roller of a roller lever (11.4) of the microswitch (35, 36), which acts as lower travel sensor (9, 10), when the brake has been tracked to follow.

5. Equipment according to the claims 1 and 4, characterised thereby, that the switching flank (11.1) displays a function signalling the maximum permissible wear of a brake lining (7, 8) on the closing of the brake through running-up of the roller of the roller lever (11.4) of the microswitch (35, 36).

6. Equipment according to the claims 1 and 5, characterised thereby, that the switching flanks (11.1, 11.2) are each arranged at an angle of at most 60° to the other.

7. Equipment according to claim 1, characterised thereby, that the springs (21, 22), which are biassable on the spring centring pin (25), which is displaceable horizontally by force disequilibrium in consequence of fracture of a brake compression spring (17, 18), with double nut (23) and nut (24) are constructed as plate springs.

8. Equipment according to claim 1, characterised thereby, that the upper travel sensor (28) is constructed as inductive travel sensor which consists of a metal armature plate (31), an iron yoke (32) and a coil (33) and is actuated by the horizontally displaceable centring pin (25).

9. Equipment according to claim 1, characterised thereby, that a reed contact (35) actuated by at least one permanent magnet (34) is present as upper travel sensor (28).

## Revendications

1. Dispositif pour détecter et signaler le fonctionnement et l'état d'un frein de sécurité à disque à deux circuits pour ascenseurs qui comporte deux ressorts de pression de frein (17, 18) et est actionné par voie électromagnétique, ce dispositif étant caractérisé en ce qu'il est prévu un boulon de centrage de ressort 25 qui est mobile dans le sens axial à l'encontre d'un ressort 21, 22 et qui actionne un palpeur de course supérieur 28 en cas de variation de la force de précontrainte dans un seul des deux ressorts de pression de frein 17, 18, et au moins un palpeur de course inférieur 9, 10 qui est actionné par un sabot de frein 5, 6 et qui signale la limite d'usure d'une garniture de frein 7, 8.

2. Dispositif selon la revendication 1, caractérisé en ce qu'il est prévu, comme palpeur de course supérieur 28, un microrupteur 34 qui est actionné par une coulisse 27 mobile horizontalement, serrée dans un double écrou 23 et comportant des flancs de commutation 27.1 et 27.2, et qui est fixé à un support 14.

3. Dispositif selon la revendication 1, caractérisé en ce qu'il est prévu, comme palpeur de course inférieur 9, 10, au moins un microrupteur 35, 36 qui est actionné par une coulisse 11 fixée à un sabot de frein 5, 6 et comportant des flancs de commutation 11.1 et 11.2.

4. Dispositif selon les revendications 1 et 3, caractérisé en ce qu'il est prévu un intervalle 11.3 entre le flanc de commutation 11.1 et le galet d'un levier à galet 11.4 du microrupteur 35, 36 agissant comme palpeur de course inférieur 9, 10, quand le frein est rajusté.

5. Dispositif selon les revendications 1 et 4, caractérisé en ce que le flanc de commutation 11.1 a une fonction de signalisation de l'usure maximale autorisée pour une garniture de frein 7, 8 grâce à la montée du galet du levier à galet 11.4 du microrupteur 35, 36 lors de la fermeture du frein.

6. Dispositif selon les revendications 1 et 5, caractérisé en ce que les flancs de commutation 11.1 et 11.2 sont disposés en définissant entre eux un angle de 60° maximum.

7. Dispositif selon la revendication 1, caractérisé en ce que les ressorts 21, 22 aptes à être précontraints à l'aide du double écrou 23 et de l'écrou 24 sur le boulon de centrage de ressort 25 mobile horizontalement à la suite d'un déséquilibre de forces dû à la rupture 30 d'un ressort de pression de frein 17, 18, sont conçus comme des rondelles-ressorts.

8. Dispositif selon la revendication 1, caractérisé en ce que le palpeur de course supérieur 28 est conçu comme un palpeur de course inductif qui est actionné par le boulon de centrage de ressort 25 mobile horizontalement, et qui se compose d'une tôle d'induit 31, d'une culasse métallique 32 et d'une bobine 33.

9. Dispositif selon la revendication 1, caractérisé en ce qu'il est prévu, comme palpeur de course supérieur 28, un contact à lame vibrante 35 actionné par au moins un aimant permanent 34.
